# EUROPÄISCHE PATENTSCHRIFT

(11) **EP 1 856 134 B1**
(45) Veröffentlichungstag und Bekanntmachung des Hinweises auf die Patenterteilung: **13.08.2008**
(21) Anmeldenummer: 06707209.0
(22) Anmeldetag: 23.02.2006
(51) Int. Cl.: C07F 7/18

(54) **VERFAHREN ZUR HERSTELLUNG VON AMINOALKYLSILANEN**
PROCESS FOR PREPARING AMINOALKYLSILANES
PROCEDE DE PRODUCTION D'AMINOALKYLSILANES

(30) Priorität: 10.03.2005 DE 102005011108
(43) Veröffentlichungstag der Anmeldung: 21.11.2007
(73) Patentinhaber: Wacker Chemie AG, 81737 München (DE)
(72) Erfinder: BAUER, Andreas, 84359 Simbach Am Inn (DE); SCHÄFER, Oliver, 84489 Burghausen (DE)
(74) Vertreter: Budczinski, Angelika
(86) Internationale Anmeldenummer: PCT/EP2006/001652
(87) Internationale Veröffentlichungsnummer: WO 2006/094643

(56) Entgegenhaltungen:
- SPEIER, JOHN L. ET AL: "Syntheses of (3-aminoalkyl) silicon compounds" JOURNAL OF ORGANIC CHEMISTRY , 36(21), 3120-6 CODEN: JOCEAH; ISSN: 0022-3263, 1971, XP002376267

## Beschreibung

Die Erfindung betrifft ein Verfahren zur Herstellung von Aminoalkylsilanen.

Aminoalkylsilane können beispielsweise als Vorstufe zur Herstellung von Aminoalkyl-terminierten Polysiloxanen verwendet werden. Weiterhin finden sie Verwendung als Haftvermittler.

In DE 100 49 183 C1 und US 2003/0130543 A1 sind zyklische Silazane der allgemeinen Formel (I) erwähnt, welche durch Aminierung von Chloralkylsilanen hergestellt werden, 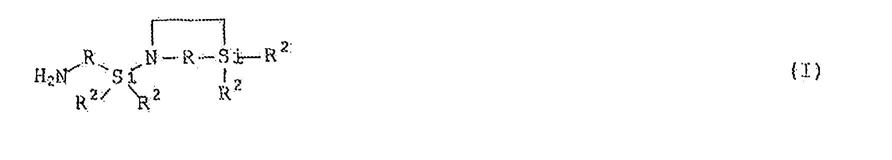 wobei
- R: einen divalenten Si-C und Si-N gebundenen, gegebenenfalls Cyano- oder halogensubstftuirerten C₃-C₁₅-Kohlenwasserstoff-Rest, in dem eine oder mehrere, einander nicht benachbarte Methylen-einheiten durch Gruppen -O-, -CO-, -COO-, -OCO-, oder -OCOO-, -S-, oder -NR^{X}- ersetzt sein können und in dem eine oder mehrere, einander nicht benachbarte Methineinheiten durch Gruppen, -N=, -N=N-, oder -P= ersetzt sein können, wobei zwischen Silicium-Atom und Stickstoffatom des Ringes mindestens 3 und maximal 6 Atome angeordnet sind,
- R^{X}: Wasserstoff oder einen gegebenenfalls halogensubstituierten C₁-C₁₀-Kohlenwasserstoffrest und
- R²: ein Wasserstoffatom oder einen monovalenten, gegebenenfalls Cyano- oder halogensubstituierten Si-C gebundenen C₁-C₂₀-Kohlenwasserstoffrest oder C₁-C₂₀-Kohlenwasserstoffoxyrest, in denen jeweils eine oder mehrere, einander nicht benachbarte Methylen-Einheiten durch Gruppen -O-, -CO-,-COO-, -OCO-, oder -OCOO-, -S-, oder -NR^{x}- ersetzt sein können und in denen eine oder mehrere, einander nicht benachbarte Methin-Eihheiten durch Gruppen, --N=, N=N- , oder -P= ersetzt sein können,
bedeutet.

Werden nun die Verbindungen der allgemeinen Formel (I) hydrolysiert, so entstehen praktisch Nebenprodukt-frei Bisaminoalkyl-substituierte Disiloxane der allgemeinen Formel (II) in hohen Ausbeuten:

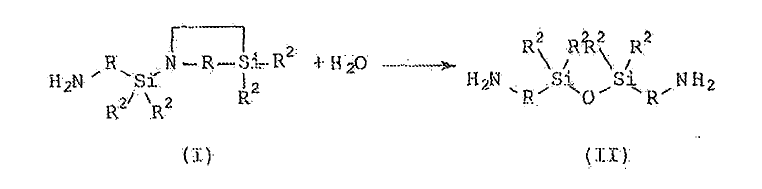

Dabei besteht der besondere Vorteil des in DE 100 49 183 Cl und US 2003/0130543 A1 beschriebenen Verfahrens darin, dass aus kommerziell relativ einfach zugänglichen Chloralkylsilanen auf wirtschaftliche Weise hochreaktive Aminoalkylsilane hergestellt werden können.

Nachteilig an dem in DE 100 49 183 C1 und US 2003/0130543 A1 beschriebenen verfahren ist jedoch, dass die Reaktion der Chloralkylsilan-Vorstufe mit Ammoniak nicht quantitativ zum gewünschten Produkt, sondern durch eine Nebenreaktion unter anderem zu sekundären Aminoalkylsilanen (IV) führt.

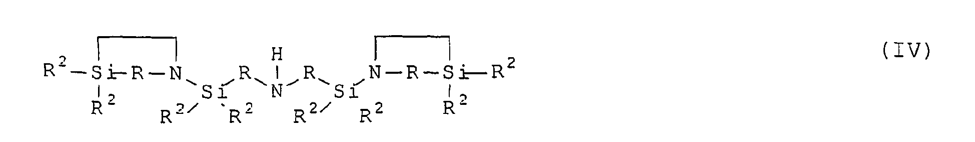

Diese können nun aber wegen Ihres außerordentlich hohen Siedepunktes praktisch nicht mehr destillativ aus dem Destillationssumpf des eigentlichen Hauptproduktes abgetrennt werden, erhalten aber noch zum Teil Fragmente, die die gewünschte primäre Aminoalkylfunktion erhalten. Weiterhin ist es technisch schwierig, aus dem, während der Destillation immer viskoser werdenden, Destillationssumpf auch das dort enthaltene Zielprodukt der allgemeinen Formel (I) vollständig abzutrennen. Dementsprechend verbleibt ebenfalls ein Anteil an (I) im Destillationssumpf. Der Destillationssumpf muss anschließend kostenintensiv entsorgt werden.

Die Aufgabe dieser Erfindung war daher, ein Verfahren zur Aufarbeitung eines Rohsilan-Destillationssumpfes zur Verfügung zu stellen, mit dem die in ihm verbliebenen primären und sekundären Aminoalkylverbindungen in einer kommerzialisierbaren Form aus dem Destillationsumpf gewonnen werden können.

In Speier et al. (J. Org. Chem., Bd. 38, Seite 3120-3126 (1971)) wird auf Seite 3123 ein Verfahren zur Herstellung von Aminoalkylsilanen offenbart.

Dies konnte überraschenderweise durch das erfindungsgemäße Verfahren gelöst werden. Das erfindungsgemäße Verfahren zur Herstellung von Aminoalkylsilanen der allgemeinen Formel (V) und/oder (VI) 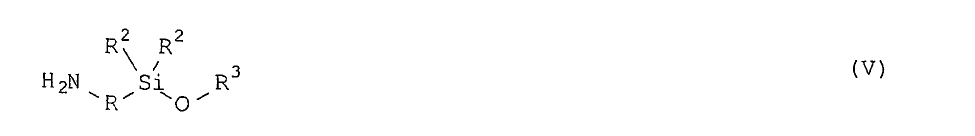 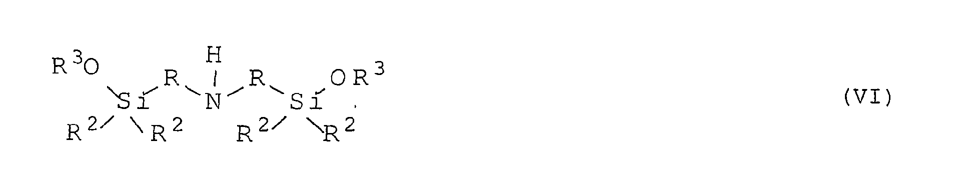 ist dadurch gekennzeichnet, dass zyklische Silazane der allgemeinen Formel (I) und/oder (IV) 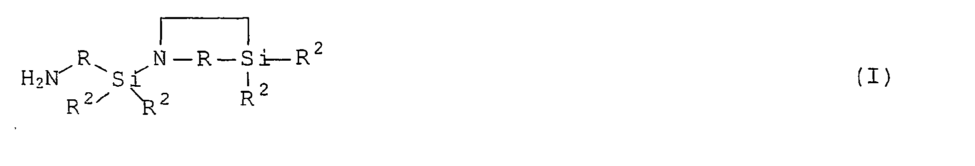 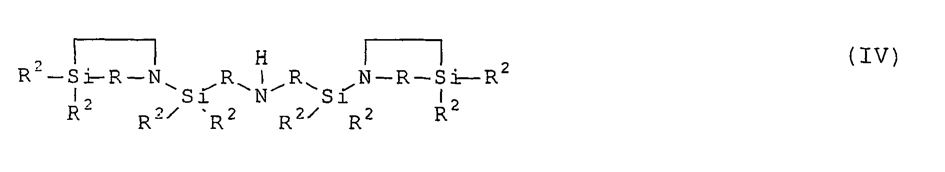 mit Alkoholen der allgemeinen Formel (III)

R³-OH (III)

umgesetzt werden, wobei
- R: einen divalenten Si-C und Si-N gebundenen, gegebenenfalls Cyano- oder halogensubstituierten C₃-C₁₅-Kohlenwasserstoff-Rest, in dem eine oder mehrere, einander nicht benachbarte Methylen-Einheiten durch Gruppen -O-, -CO-, -COO-, -OCO-, oder -OCOO-, -S-, oder-NR^{X}- ersetzt sein können und in dem eine oder mehrere, einander nicht benachbarte Methin-Einheiten durch Gruppen -N=, -N=N-, oder -P= ersetzt sein können, wobei zwischen Silicium-Atom und Stickstoffatom des Ringes mindestens 3 und maximal 6 Atome angeordnet sind,
- R^{X}: Wasserstoff oder einen gegebenenfalls halogensubstituierten C₁-C₁₀-Kohlenwasserstoffrest und
- R²: ein Wasserstoffatom oder einen monovalenten gegebenenfalls Cyano- oder halogensubstituierten Si-C gebundenen C₁-C₂₀-Kohlenwasserstoffrest oder C₁-C₂₀-Kohlenwasserstoffoxyrest in denen jeweils eine oder mehrere, einander nicht benachbarte Methylen-Einheiten durch Gruppen -O-, -CO-, -COO-, -OCO-, oder -OCOO-, -S-, oder -NR^{x}- ersetzt sein können und in denen eine oder mehrere, einander nicht benachbarte Methin-Einheiten durch Gruppen -N=, -N=N-, oder -p= ersetzt sein können, und
- R³: einen monovalenten C1-C20-Kohlenwasserstoffrest, in denen jeweils eine oder mehrere, einander nicht benachbarte Methylen-Einheiten durch Gruppen -O-, -CO-, -COO-, -OCO-, oder -OCOO-, -S-, oder -NRx- ersetzt sein können und in denen eine oder mehrere, einander nicht benachbarte Methin-Einheiten durch Gruppen, -N=, -N=N-, oder -P= ersetzt sein können
bedeutet.

Das erfindungsgemäßen Verfahren ist bevorzugt dadurch gekennzeichnet, dass die zyklischen Silazane der allgemeinen Formal (I) und (IV) in Form des Destillationssumpfes einer Rohsilan-Destillation eingesetzt werden.

Besonders bevorzugt wird der bei der Destillation eines Rohsilans, gemäß den Verfahren nach US 2003/0130543 A1 und DE 100 49 183 C1, anfallende Destillationssumpf mit Alkoholen der allgemeinen Formel (III) umgesetzt.

R³-OH (III)

Dabei weist R³ die oben genannte Bedeutung auf.

Der oben beschriebene Destillationssumpf enthält noch Anteile der Verbindung der allgemeinen Formel (I), die mit Alkoholen der allgemeinen Formel (III) umgesetzt werden. Dabei entstehen Aminoalkyl-substituierte Dialkylalkoxysilane der allgemeinen Formel (V).

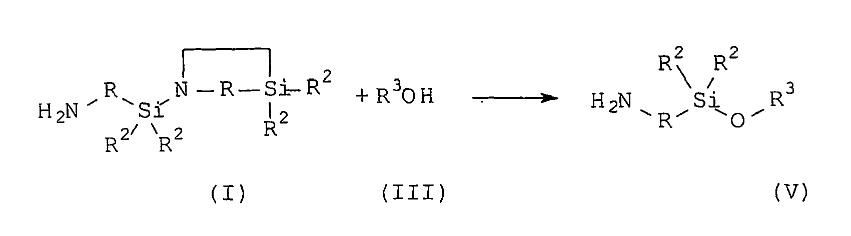

Dabei weisen R, R² und R³ die oben genannten Bedeutungen auf.

Aus den nicht gewünschten Nebenprodukten der allgemeinen Formel (IV) entstehen durch Umsetzung mit Alkoholen der allgemeinen Formel (III) ebenfalls Aminoalkyl-substituierte Dialkylalkoxysilane der allgemeinen Formel (V) und zusätzlich Bis(dialkylalkoxysilyl-alkyl)-amine der allgemeinen Formel (VI).

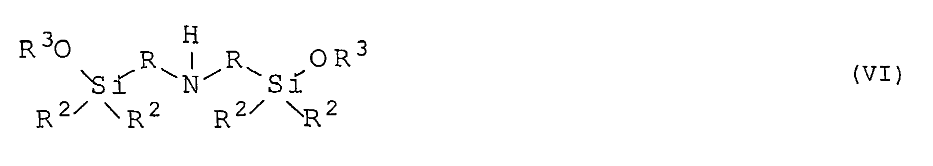

Dabei weisen R, R² und R³ die oben genannten Bedeutungen auf.

Das Verfahren kann sowohl mit stöchiometrischen Mengen an Alkohol (III), bezogen auf die mol reaktive Si-N-Bindungen der Verbindungen (I) und/oder (IV), als auch in nicht stöchiometrischen Mengen erfolgen. Wird ein Unterschuss an Alkohol (III) in dem Verfahren eingesetzt so erhält man nur teilalkoxylierte Verbindungen. Bevorzugt erfolgt die Umsetzung jedoch mit einem Überschuss an Alkohol (III). Besonders bevorzugt wird ein Überschuss von 10 bis 30 mol-% Alkohol (III) bezogen auf die mol reaktive Si-N-Bindungen der Verbindungen (I) und/oder (IV) verwendet.

Besonders bevorzugt ist ein Verfahren zur Herstellung von Aminoalkylsilanen bei dem R ein Propylenrest bedeutet.

Ebenfalls besonders bevorzugt ist ein Verfahren zur Herstellung von Aminoalkylsilanen bei dem R² ein Rest ausgewählt aus der Gruppe enthaltend Methyl, Ethyl, Phenyl, Vinyl oder Trifluorpropyl bedeutet.

Weiterhin besonders bevorzugt ist ein Verfahren zur Herstellung von Aminoalkylsilanen bei dem R³ ein Rest ausgewählt aus der Gruppe enthaltend Methyl, Ethyl, Isopropyl oder Methyoxyethyl bedeutet.

Die Reaktion der Sumpf-Komponenten mit dem Alkohol verläuft exotherm und Nebenproduktfrei in hohen Ausbeuten. Die Verbindungen der allgemeinen Formeln (V) und (VI) können anschließend leicht destillativ abgetrennt werden.

Um eine gute Durchmischung der Reaktionskomponenten zu gewährleisten, wird das Verfahren bevorzugt unter Rühren durchgeführt. Die Reaktionstemperatur ist durch die Löslichkeit der Reaktionskomponenten nach unten und durch die Zersetzungstemperaturen der Edukte und Produkte nach oben hin begrenzt. Bevorzugt wird das Verfahren bei einer Temperatur von 0°C bis 150°C durchgeführt. Bevorzugt erfolgt das Verfahren bei einer Temperatur über Raumtemperatur. Besonders bevorzugt ist eine Reaktionstemperatur von mindestens 20°C, insbesondere mindestens 35°C.

Bevorzugt erfolgt im Anschluss eine Isolierung und Reinigung der Verbindungen, der allgemeinen Formel (V) und (VI), durch fraktionierte Destillation. Die so dargestellten Verbindungen lassen sich in der dem Fachmann bekannten Weise handhaben.

Das Verfahren kann bevorzugt in Anwesenheit oder in Abwesenheit von weiteren aprotischen Lösungsmitteln durchgeführt werden. Falls aprotische Lösungsmittel verwendet werden, sind Lösungsmittel oder Lösungsmittelgemische mit einem Siedepunkt beziehungsweise Siedebereich von bis zu 120°C bei 0,1 MPa bevorzugt. Beispiele für solche Lösungsmittel sind Ether, wie Dioxan, Tetrahydrofuran, Diethylether, Diisopropylether, Diethylengly-coldimethylether; chlorierte Kohlenwasserstoffe, wie Dichlor-methan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Di-isopropylketon, Methyl-isobutylketon als MIBK bezeichnet; Ester, wie Ethylacetat, Butylacetat, Propylpropionat, Ethylbutyrat, Ethyl-isobutyrat; Schwefelkohlenstoff und Nitrobenzol, oder Gemische dieser Lösungsmittel.

Das Verfahren wird bevorzugt kontinuierlich oder diskontinuierlich durchgeführt.

Das erfindungsgemäße Verfahren hat folgende Vorteile gegenüber dem Stand der Technik. Zum einen wird die Ausbeute des Hauptprodukts erhöht. Zum zweiten wird zusätzlich ein Nebenprodukt isoliert und steht zur weiteren Nutzung zur Verfügung. Zudem fallen wesentlich weniger Entsorgungskosten an, da der Destillationssumpf zum größten Teil zu verwendbaren Produkten aufgearbeitet wird. Somit erhöht sich die Wirtschaftlichkeit des Gesamtprozesses erheblich.

Alle bereits genannten Symbole der vorstehenden. Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen, alle Drücke 0,10 MPa absolut und alle Temperaturen 20°C.

### Beispiele

### Beispiel 1: Methanolyse eines zyklischen Silazans zu 3-Aminopropyl-dimethylmethoxysilan

23 g (100 mmol) N-((3-Aminopropyl)-dimethylsilyl)-2,2-dimethyl-1-aza-2-silacyclopentan wurden in 50 ml THF gelöst und anschließend wurden 30 ml Methanol unter Eiskühlung zugegeben. Nach Destillation erhielt man 28 g Aminopropyldimethylmethoxysilan (95% Ausbeute).

### Beispiel 2: Methanolyse eines Destillationssumpfes mit 10% Alkohol-Überschuss

In einem mit Argon inertisierten 4 1 Dreihalskolben wurden 1613,5 g des oben beschriebenen Destillationssumpfes vorgelegt. Dies entsprach einer theoretischen Menge von 7,0 mol an N-((3-Aminopropyl)-dimethylsilyl)-2,2-dimethyl-1-aza-2-silacyclopentan. Anschließend wurde unter Rühren 493,4 g (15,4 mol) Methanol innerhalb von 2 h zugetropft, sodass die Temperatur des Reaktionsgemisches 40°C nicht überschritten wurde. Anschließend wurde noch etwa 1 Stunde bei Raumtemperatur nachgerührt.

Zusammensetzung des Reaktionsgemisches (GC, in Flächen-%):

| | |
|---|---|
| 3,2% | Methanol |
| 38,2% | (V) |
| 51,4% | (VI) |

Nach fraktionierter Destillation erhielt man 732,7 g (V) und 930,4 g (VI) jeweils mit einer GC-Reinheit von > 96%.

### Beispiel 3: Methanolyse eines Destillationssumpfes mit 80% Alkohol-Überschuss

In einem mit Argon inertisierten 4 1 Dreihalskolben wurden 1500,0 g des Destillationssumpfes analog Beispiel 2 vorgelegt. Dies entsprach einer theoretischen Menge von 6,5 mol an N-((3-Aminopropyl)-dimethylsilyl)-2,2-dimethyl-1'-aza-2-silacyclopentan. Anschließend wurde unter Rühren 750,0 g (23,4 mol) Methanol innerhalb von 2 h zugetropft, sodass die Temperatur des Reaktionsgemisches 40°C nicht überschritten wurde. Anschließend wurde noch 1 h bei Raumtemperatur nachgerührt.

Zusammensetzung des Reaktionsgemisches (GC, in Flächen-%):

| | |
|---|---|
| 20,3% | Methanol |
| 31,1% | (V) |
| 43,1% | (VI) |

Nach fraktionierter Destillation erhielt man 662,7 g (V) und 787,8 g (VI) jeweils mit einer GC-Reinheit von > 96%.

## Patentansprüche

1. Verfahren zur Herstellung von Aminoalkylsilanen der allgemeinen Formel (V) und/oder (VI), 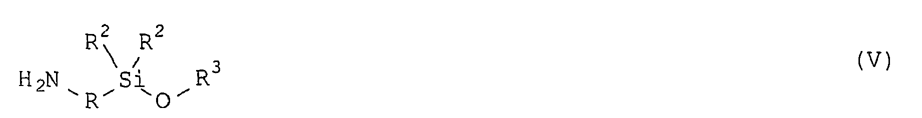 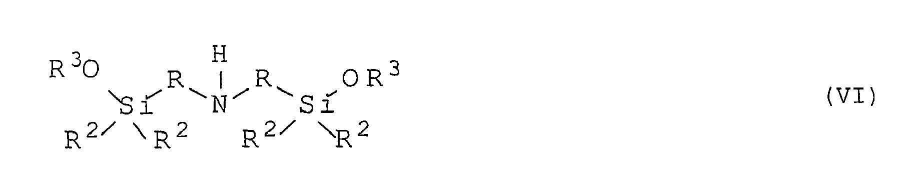 **dadurch gekennzeichnet, dass** zyklische Silazane der allgemeinen Formel (I) und/oder (IV) 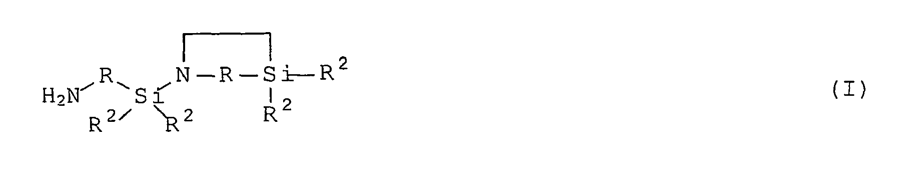 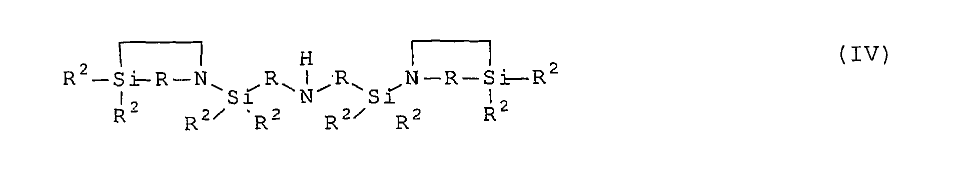 mit Alkoholen der allgemeinen Formel (III)
R³-OH (III)
umgesetzt werden, wobei
R einen divalenten Si-C und Si-N gebundenen, gegebenenfalls Cyano- oder halogensubstituierten C₃-C₁₅-Kohlenwasserstoff-Rest, in dem eine oder mehrere, einander nicht benachbarte Methylen-Einheiten durch Gruppen -O-, -CO-, -COO-, -OCO-, oder -OCOO-, -S-, oder -NR^{X}- ersetzt sein können und in dem eine oder mehrere, einander nicht benachbarte Methin-Einheiten durch Gruppen -N=, -N=N-, oder -P= ersetzt sein können, wobei zwischen Silicium-Atom und Stickstoffatom des Ringes mindestens 3 und maximal 6 Atome angeordnet sind,
R^{X} Wasserstoff oder einen gegebenenfalls halogensubstituierten C₁-C₁₀-Kohlenwasserstoffrest und
R² ein Wasserstoffatom oder einen monovalenten, gegebenenfalls Cyano- oder halogensubstituierten Si-C gebundenen C₁-C₂₀-Kohlenwasserstoffrest oder C₁-C₂₀-Kohlenwasserstoffoxyrest, in denen jeweils eine oder mehrere, einander nicht benachbarte Methylen-Einheiten durch Gruppen -O-, -CO-, -COO-, -OCO- , oder -OCOO-, -S-, oder -NR^{x}- ersetzt sein können und in denen eine oder mehrere, einander nicht benachbarte Methin-Einheiten durch Gruppen, -N=, -N=N-, oder -P= ersetzt sein können, und
R³ einen monovalenten C₁-C₂₀-Kohlenwasserstoffrest, in denen jeweils eine oder mehrere, einander nicht benachbarte Methylen-Einheiten durch Gruppen -O-, -CO-, -COO-, -OCO-, oder -OCOO-, -S-, oder -NRx- ersetzt sein können und in denen eine oder mehrere, einander nicht benachbarte Methin-Einheiten durch Gruppen -N=, -N=N-,oder -P= ersetzt sein können
bedeutet.

2. Verfahren zur Herstellung von Aminoalkylsilanen gemäß Anspruch 1, **dadurch gekennzeichnet, dass** die zyklischen Silazane der allgemeinen Formel (I) und (IV) in Form des Destillationssumpfes einer Rohsilan-Destillation eingesetzt werden.

3. Verfahren gemäß Anspruch 1 und 2, **dadurch gekennzeichnet, dass** R ein Propylenrest bedeutet.

4. Verfahren gemäß einem der Ansprüche 1 bis 3, **dadurch gekennzeichnet, dass** R² ein Rest ausgewählt aus der Gruppe enthaltend Methyl, Ethyl, Phenyl, Vinyl oder Trifluorpropyl bedeutet.

5. Verfahren gemäß einem der Ansprüche 1 bis 4, **dadurch gekennzeichnet, dass** R³ ein Rest ausgewählt aus der Gruppe enthaltend Methyl, Ethyl, Isopropyl oder Methyoxyethyl bedeutet.

6. Verfahren gemäß einem der Ansprüche 1 bis 5, **dadurch gekennzeichnet, dass** das Verfahren bei einer Temperatur von 0°C bis 150°C durchgeführt wird.

7. Verfahren gemäß einem der Ansprüche 1 bis 6, **dadurch gekennzeichnet, dass** das Verfahren unter Rühren durchgeführt wird.

8. Verfahren gemäß einem der Ansprüche 1 bis 7, **dadurch gekennzeichnet, dass** im Anschluss eine Isolierung und Reinigung der Verbindungen, der allgemeinen Formel (V) und (VI), durch fraktionierte Destillation erfolgt.

## Claims

1. Process for preparing aminoalkylsilanes of the general formula (V) and/or (VI), 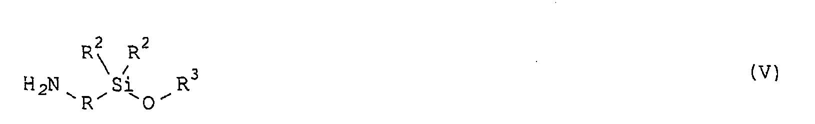 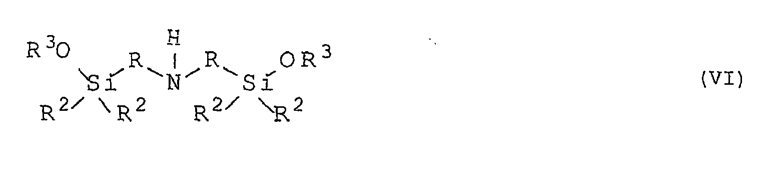 **characterized in that** cyclic silazanes of the general formula (I) and/or (IV) 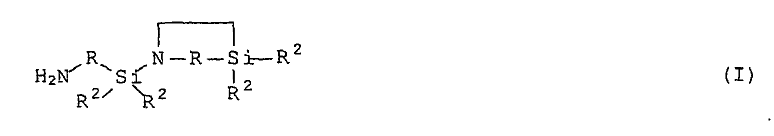 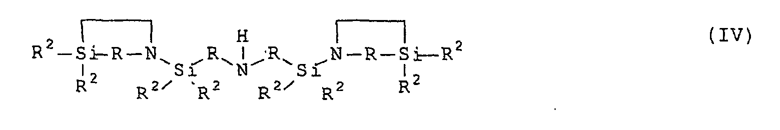 are reacted with alcohols of the general formula (III)
R³-OH (III),
where
R is a divalent Si-C- and Si-N-bonded, if appropriate cyano- or halogen-substituted, C₃-C₁₅-hydrocarbon radical in which one or more nonadjacent methylene units can have been replaced by groups -O-, -CO-, -COO-, -OCO- , or -OCOO- , -S- , or -NR^{x}- , and in which one or more nonadjacent methyne units can have been replaced by groups -N=, -N=N-, or -P=, where at least 3 and at most 6 atoms have been arranged between the silicon atom and nitrogen atom of the ring,
R^{x} is hydrogen or a C₁-C₁₀-hydrocarbon radical, if appropriate halogen-substituted, and
R² is a hydrogen atom or a monovalent, if appropriate cyano- or halogen-substituted, Si-C-bonded C₁-C₂₀-hydrocarbon radical or C₁-C₂₀-oxyhydrocarbon radical, in which, in each case, one or more nonadjacent methylene units can have been replaced by groups -O-, -CO-, -COO-, -OCO-, or -OCOO-, -S-, or -NR^{x}-, and in which one or more nonadjacent methyne units can have been replaced by groups -N=, -N=N-, or -P=,
and
R³ is a monovalent C₁-C₂₀-hydrocarbon radical in which in each case one or more nonadjacent methylene units can have been replaced by groups -O-, -CO-, -COO-, -OCO-, or -OCOO-, -S-, or -NR^{x}-, and in which one or more nonadjacent methyne units can have been replaced by groups -N=, -N=N-, or -P=.

2. Process for preparing aminoalkylsilanes according to Claim 1, **characterized in that** the form in which the cyclic silazanes of the general formulae (I) and (IV) are used is that of the bottom product from distillation of a crude silane.

3. Process according to Claim 1 or 2, **characterized in that** R is a propylene radical.

4. Process according to any of Claims 1 to 3, **characterized in that** R² is a radical selected from the group consisting of methyl, ethyl, phenyl, vinyl, and trifluoropropyl.

5. Process according to any of Claims 1 to 4, **characterized in that** R³ is a radical selected from the group consisting of methyl, ethyl, isopropyl, and methoxyethyl.

6. Process according to any of Claims 1 to 5, **characterized in that** the process is carried out at a temperature of from 0°C to 150°C.

7. Process according to any of Claims 1 to 6, **characterized in that** the process is carried out with stirring.

8. Process according to any of Claims 1 to 7, **characterized in that** it is followed by isolation and purification of the compounds, of the general formulae (V) and (VI), via fractionated distillation.

## Revendications

1. Procédé de préparation d'aminoalkylsilanes de formules générales (V) et/ou (VI), 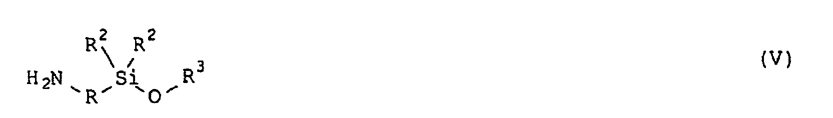 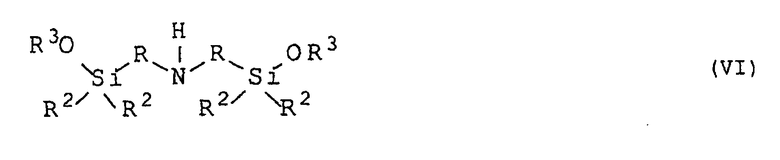 **caractérisé en ce que** des silazanes cycliques de formules générales (I) et/ou (IV) 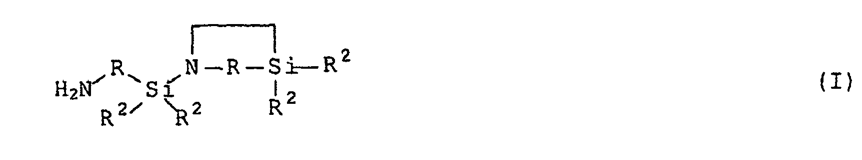 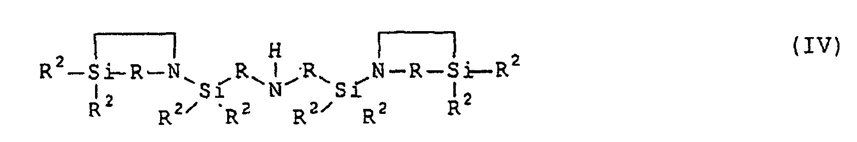 sont mis à réagir avec des alcools de formule générale (III)
R³-OH (III)
dans lesquelles :
R représente un radical hydrocarboné en C₃₋₁₅ bivalent, lié à Si-C et à Si-N, éventuellement cyano- ou halogéno-substitué, dans lequel un ou plusieurs motifs méthylène non adjacents l'un à l'autre peuvent être remplacés par des groupes -O-, -CO-, -COO-, -OCO-, ou -OCOO-, -S-, ou -NR^{x}-, et dans lequel un ou plusieurs motifs méthyne non adjacents l'un à l'autre peuvent être remplacés par des groupes -N=, -N=N-, ou -P=, où au moins 3 et au plus 6 atomes sont disposés entre l'atome de silicium et l'atome d'azote du noyau,
R^{x} représente un atome d'hydrogène ou un radical hydrocarboné en C₁-C₁₀, éventuellement halogéno-substitué, et
R² représente un atome d'hydrogène ou un radical hydrocarboné en C₁₋₂₀ ou un radical oxy-hydrocarboné en C₁₋₂₀ monovalent, lié à Si-C, éventuellement cyano- ou halogéno-substitué, dans lesquels, dans chaque cas, un ou plusieurs motifs méthylène non adjacents l'un à l'autre peuvent être remplacés par des groupes -O-, -CO-, -COO-, -OCO-, ou -OCOO-, -S-, ou -NR^{x}-, et dans lesquels un ou plusieurs motifs méthyne non adjacents l'un à l'autre peuvent être remplacés par des groupes -N=, -N=N-, ou -P=, et
R³ représente un radical hydrocarboné en C₁₋₂₀ monovalent, dans lequel, dans chaque cas, un ou plusieurs motifs méthylène non adjacents l'un à l'autre peuvent être remplacés par des groupes -O-, -CO-, -COO-, -OCO-, ou -OCOO-, -S-, ou -NR^{x}-, et dans lequel un ou plusieurs motifs méthyne non adjacents l'un à l'autre peuvent être remplacés par des groupes -N=, -N=N-, ou -P=.

2. Procédé de préparation d'aminoalkylsilanes selon la revendication 1, **caractérisé en ce que** les silazanes cycliques de formules générales (I) et (IV) sont utilisés sous la forme de la queue de distillation d'une distillation de silane brut.

3. Procédé selon les revendications 1 et 2, **caractérisé en ce que** R représente un radical propylène.

4. Procédé selon l'une quelconque des revendications 1 à 3, **caractérisé en ce que** R² représente un radical choisi parmi le groupe constitué d'un groupe méthyle, d'un groupe éthyle, d'un groupe phényle, d'un groupe vinyle ou d'un groupe trifluoropropyle.

5. Procédé selon l'une quelconque des revendications 1 à 4, **caractérisé en ce que** R³ représente un radical choisi parmi le groupe constitué d'un groupe méthyle, d'un groupe éthyle, d'un groupe isopropyle ou d'un groupe méthoxyéthyle.

6. Procédé selon l'une quelconque des revendications 1 à 5, **caractérisé en ce que** le procédé est réalisé à une température de 0 °C à 150 °C.

7. Procédé selon l'une quelconque des revendications 1 à 6, **caractérisé en ce que** le procédé est réalisé sous agitation.

8. Procédé selon l'une quelconque des revendications 1 à 7, **caractérisé en ce qu'**une isolation et une purification des composés de formules générales (V) et (VI) sont ensuite réalisées par distillation fractionnée.
